# EUROPEAN PATENT SPECIFICATION

(11) **EP 3 670 361 B1**
(45) Date of publication and mention of the grant of the patent: **10.05.2023**
(21) Application number: 18215602.6
(22) Date of filing: 21.12.2018
(51) Int. Cl.: B64G 1/40, B64G 1/42, B64G 1/00

(54) **METHOD AND POWER SUPPLY SYSTEM FOR PROVIDING ELECTRIC ENERGY IN A FLIGHT VEHICLE**
VERFAHREN UND STROMVERSORGUNGSSYSTEM ZUR BEREITSTELLUNG VON ELEKTRISCHER ENERGIE IN EINEM FLUGZEUG
PROCÉDÉ ET SYSTÈME D'ALIMENTATION ÉLECTRIQUE POUR FOURNIR DE L'ÉNERGIE ÉLECTRIQUE À UN VÉHICULE VOLANT

(43) Date of publication of application: 24.06.2020
(73) Proprietor: ArianeGroup GmbH, 82024 Taufkirchen (DE)
(72) Inventor: Sebald, Johannes, 28199 Bremen (DE); Oehler, Winfried, 28199 Bremen (DE)
(74) Representative: Marschall, Stefan

(56) References cited:
- EP-A1- 2 354 008
- DE-A1- 3 913 582
- US-A- 4 786 019
- US-A1- 2012 198 814
- US-B1- 6 446 909
- US-B2- 9 341 315

## Description

The present invention concerns a method for providing electric energy in a flight vehicle (which comprises an aircraft or a spacecraft). The invention further concerns a power supply system for a flight vehicle and a flight vehicle with a power supply system.

For providing electrical energy in flight vehicles, in particular in rockets or other spacecrafts, usually batteries are used, which may comprise non-rechargeable (primary) cells or rechargeable (secondary) cells; such energy system is described, for instance, in "Evolutions of the Ariane 5 Electrical Power System" of H. Barde, C. Urruty, C., and J. Jaumes, published in: Space Power, Proceedings of the Sixth European Conference held 6-10 May, 2002 in Porto, Portugal, Edited by A. Wilson, European Space Agency, ESA SP-502, 2002, p.659.

In particular, fuel cells converting chemical energy into electrical energy may be employed, as has been realised e.g. in the Apollo Command and Service Modul (CSM) and the Space Shuttle. In planetary missions, nuclear batteries (also called "Radioisotope Thermoelectric Generators" (RTG)) may also be used.

However, utilisation of batteries generally requires maintenance and control of charge state. Moreover, the mass of the batteries to be carried by a flight vehicle implies additional effort and energy consumption.

As a further possibility, electric energy may be generated during a flight or a mission of a spacecraft. Document US 6 454 218 B1 discloses an integrated system for providing 3-axis attitude control by using counter-rotating inertia wheels which each include an electric motor-generator enabling (together with an electric load controller) the creation of reaction roll torque. Thereby, the inclusion of hot-gas flow-management conduits and nozzles for developing side thrust is intended to be eliminated, which are considered disadvantageous in said patent.

In document GB 2 225 059 A, a gas turbine electricity generation is disclosed. Accordingly, chemical energy of oxygen and hydrogen is converted by combustion. To inhibit discharge of water, the system is closed.

Document DE 3 913 582 A1 discloses providing energy by means of a fan arranged in an exhaust plume of a rocket drive.

From document US 4 786 019 A, an energy efficient solid propellant attitude system is known. Document US 2012/0198814 A1 discloses the use of accelerated gas to drive a turbine or an electrical generator.

It is an object of the present invention to provide for an alternative manner of providing power by means of an electric generator in a flight vehicle.

The problem is solved by a method according to claim 1, and a flight vehicle according to claim 7. Advantageous embodiments are disclosed in the dependent claims, the description and the figure.

In particular, a power supply system according to the present invention is configured to execute a method according to an embodiment of the present invention.

The present invention thus provides an electric power source which may be operated on-demand and depending on the particular requirements, while a minimum of mass and service is required. The provision and installation of the power supply system can thus be realised independently of the details of the respective flight or mission, such that the construction of the flight vehicle is simplified, the flight vehicle has a large field of applicability, and an adaptation to a particular mission in terms of an adaption of battery storage can be avoided at least with regard to a power sink configured to be powered by the power supply. Moreover, as compared to conventional power systems employing batteries, a large amount of energy can be easily made available to the flight vehicle. In particular, in embodiments where the flight vehicle comprises a spacecraft, one or more launching devices may be powered electrically.

Moreover, as additionally (and preferably simultaneously to driving the at least one electric generator) a flight control system is controlled with the generated gas flow, according to the present invention, the gas generator has an advantageous multiple function. Thereby, energy losses can be reduced, and mass and space needed for the flight vehicle can be minimised.

Operating the flight control system may comprise controlling one or more flight parameter(s) of the flight vehicle. In particular, it may comprise maintaining one or more flight parameter(s) of the flight vehicle and/or modifying one or more flight parameters; in case of both maintaining and modifying, different flight parameters may be concerned or a same parameter at another time.

Such flight parameters may be, for instance, a respectively current position (relative to another object such as a point on the earth's surface), a respectively current linear velocity or a respectively current orientation of the flight vehicle.

According to advantageous embodiments of the present invention, the flight control system comprises a propulsion system with a tank. Furthermore, the gas of the gas flow generated by the generator may be hot. Operating the flight control system may then comprise pressurising the tank by vaporising a liquid within the tank using heat of the hot gas flow. In particular, the flight control system may further comprise a heat exchanger the hot gas generated by the gas generator may be conveyed through, so as to release its heat. The heat may then be used to vaporise the liquid within the tank. By the thus generated additional gas, the pressure in the tank may be increased, which may be utilised to feed an engine. Thereby, a respectively current parameter of the flight vehicle, such as its relative position, its velocity and/or its orientation may be controlled. Said liquid may be a fuel (such as, for instance, LH2) or an oxidiser (such as, for example, LOX).

Additionally or alternatively, the flight control system may comprise a nozzle system. Operating the flight control system may then comprise discharging gas of the gas flow through one or more nozzles of the nozzle system.

A particular (intended) effect may preferably be caused by a respective position, orientation and/or coaction of the one or more nozzles of the nozzle system employed for discharging. Thereby, for example, a predetermined result may preferably provoked, such as that one or more flight parameters has/have a predetermined value, or it may be obviated that the gas discharge causes a variation of one or more of the said respective parameter(s). In particular, by controlling the at least one parameter of the flight vehicle when discharging the gas, negative impacts of the gas discharge can be prevented or even positive effects thereof can be provoked. As mentioned above, such flight parameter may be a particular (relative) position, linear velocity and/or orientation of the flight vehicle).

According to advantageous embodiments including a nozzle system, such nozzle system comprises a plurality of nozzles, one or more of which may be selectable for being employed or discarded for a particular gas discharge operation. That is, the power supply system may be adjustable with respect to the nozzles used in a respective situation; in particular, a power supply system according to the present invention may comprise a control unit for selecting respective nozzles. To implement the selection, the nozzle(s) and/or respective portion(s) of the line system may then be blockable. The respective selection may be based on an intended result, e.g. such that a respective flight parameter is maintained or modified due to the discharged gas.

The selectable nozzles may be individually selectable for respectively being employed of discarded. According to a particular embodiment with selectable nozzles, the nozzle system comprises at least one group of at least two nozzles which can be selected only together for a discharge operation.

Additionally or alternatively, the nozzle system may comprise one or more compulsory nozzle(s) which are configured to be employed in any discharge operation of the power supply system.

Analogously, the inventive method may comprise selecting one or more nozzles of the nozzle system for discharging the gas flow through the selected nozzles. In particular, the selecting may be made such that a current flight parameter (such as a (relative) position, a (linear) velocity and/or an orientation of the flight vehicle) is maintained when the gas is discharged through the selected nozzle(s), or such that a current flight parameter of the flight vehicle is modified.

These embodiments provide for the advantage of a variable effect of the operation of the power supply system. Thus, a particularly flexible applicability thereof is achieved.

According to advantageous embodiments comprising a nozzle system, one or more nozzles of the nozzle system may (itself) be adjustable, e.g. with respect to its/their orientation and/or size of its (their) respective opening. In particular, such one or more nozzle(s) may be adjustable so as to provide for maintaining or modifying a respectively current flight parameter (such as a (relative) position, a linear velocity and/or an orientation of the flight vehicle) depending on its/their respective adjustment when the gas flow is discharged through the at least one nozzle. In particular, the power supply system according to the present invention may comprise a control unit for adjusting the respective nozzles.

Analogously, according to advantageous embodiments, the method comprises adjusting the one more adjustable nozzle accordingly.

In this way, various effects of the nozzles can be advantageously provoked, depending on and in accordance with a respective situation.

According to particular advantageous embodiments of the present invention, the nozzle system comprises adjustable nozzles, nozzles being which are selectable for being used or discarded in a discharge operation and/or nozzles which are both adjustable and selectable.

The at least one electric generator is preferably arranged on a turbine configured to convert a linear gas flow into a rotation. It preferably transforms rotational energy into electric energy. The gas generator and/or the electric generator may be configured to operate continuously, to operate intermittently or to operate either continuously or intermittently based on a respective adjustment. Analogously, the method according to the present invention may comprise operating the gas generator and/or the electric generator intermittently or continuously or alternately intermittently - continuously. Concerning the case of intermittent operation, the operation may be interrupted by regular or irregular intervals of time.

For instance, the operation may be stopped when a predetermined flight parameter of the flight vehicle has been accomplished, when a predetermined amount of energy (to be currently used and/or to be stored) has been provided and/or - in respective embodiments in which operating the flight control system comprises pressurising a tank as mentioned above - when a predetermined pressure in the tank has been reached.

The electric generator may preferably comprise an electronic unit configured to process electrical energy provided by the electric generator. Analogously, the inventive method may comprise processing the provided electric energy. Said processing may comprise, for example, converting a respective voltage to a voltage used by an aviation electronic, and/or (intermediately) storing at least a portion of the provided electric energy by means of one or more capacitors and/or rechargeable (secondary) cells.

A flight vehicle according to the present invention is configured to realise an aeronautical flight and/or a flight beyond the atmosphere. It comprises an aircraft or a spacecraft. According to a preferred embodiment, the flight vehicle may comprise a stage, in particular an upper stage of a multistage rocket. The flight vehicle comprises a load carried by and detachable from the aircraft or spacecraft (or stage), such as a satellite or a space module to be transported into space.

A flight vehicle according to the present invention comprises a power supply system according to an embodiment of the present invention, and at least one power sink electrically connected to the electric generator (and thus configured to be powered by the power supply system).

According to an advantageous embodiment, the inventive method comprises conducting the provided electric energy to one or more power sink(s).

In these embodiments, the one or more power sink(s) may comprise an energy storage device (such as one or more rechargeable (secondary) cells, an accumulator or a capacitor), and/or an electric consumer device (such as at least one element of an avionics system of the flight vehicle). According to the invention, at least one of the one or more power sink(s) belongs to an external element such as satellite or a space module carried by the flight vehicle, or such as a launcher device.

According to preferred embodiments of an inventive flight vehicle, the gas generator is further configured to drive a turbopump for feeding a combustion chamber of the flight vehicle with propellant. To this end, the gas flow used for driving the at least one electric generator may be used for driving the turbopump, or a further gas flow may be generated (or branched off). Analogously, the method according to the present invention may comprise driving a turbopump for feeding a combustion chamber of the flight vehicle with propellant with the gas flow or a further gas flow generated the gas generator. Thus, in these embodiments, the gas generator has a further function, which results in reduced mass and space being needed for the flight vehicle.

In the following, a preferred embodiment of the present invention is explained with respect to an accompanying drawing. As is to be understood, the various elements and components are depicted as examples only, may be facultative and/or combined in a manner different than that depicted.

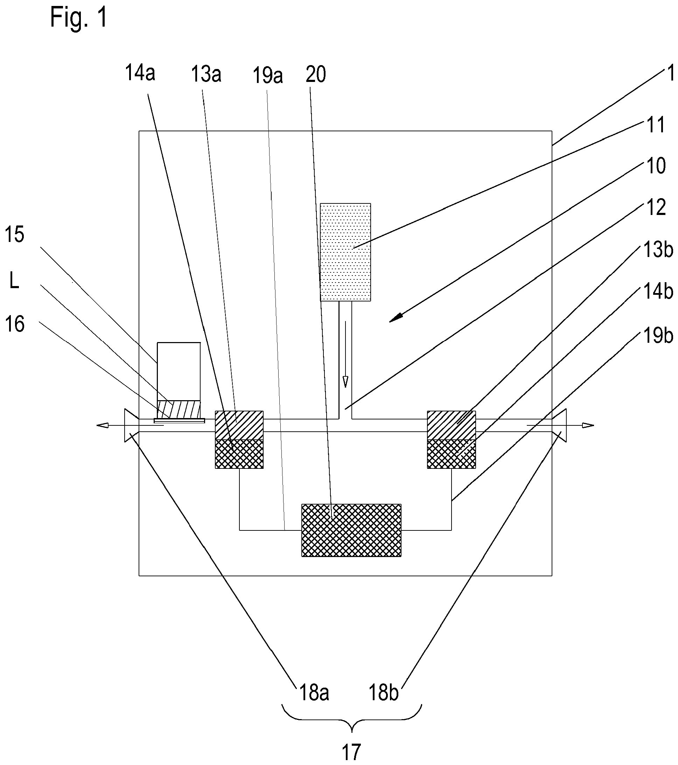

Shown is schematically in
- Fig. 1:: a flight vehicle according to an exemplary embodiment of the present invention.

In Figure 1, an exemplary embodiment of a flight vehicle 1 according to the present invention is schematically shown. For example, the flight vehicle may comprise (in particular be) an aircraft or a spacecraft; in particular it may comprise an upper stage of a multistage rocket. Optionally, the flight vehicle 1 may comprise a load carried by and detachable from the aircraft or spacecraft, respectively.

To improve intelligibility, the figure is simplified, and only aspects used below to explain the present invention are depicted. As is to be understood, the flight vehicle comprises further elements than those shown, and the dimensions of the symbols in the figure are not intended to conform to the dimensions of the elements they represent.

The flight vehicle 1 includes a power supply system 10 and a power sink 20 such as at least one energy storage device (e.g., one rechargeable (secondary) cell(s), accumulator(s) and/or a capacitor(s)) and/or at least one electric consumer device (e.g., at least one element of an avionics system of the flight vehicle).

In the present invention the power sink 20 belongs to a detachable load carried by such aircraft or spacecraft, or the power sink comprises at least one unit belonging to an aircraft or spacecraft and at least one unit belonging to a carried load.

The power supply system 10 comprises a gas generator 11, a gas line system 12 connected thereto, two electric generators 13a, 13b each having connected thereto a respective electronic unit 14a, 14b, and a flight control system: In the exemplary embodiment depicted, the flight control system comprises a propulsion system (with a tank 15 and a heat exchanger 16) and a nozzle system 17 with nozzles 18a, 18b. To increase clarity of the figure, an engine preferably further comprised by the propulsion system is not shown.

The gas generator 11 is configured to generate a gas flow from fuels and oxidants available in the flight vehicle. For instance, the fuels and oxidants may include hydrogen and oxygen, or derivates of hydrazine and N₂O₄.

The generated gas flow is conveyed through the gas line system 12, as illustrated by the arrows. Thereby, the gas flow drives the electric generators 13a, 13b, which thus provide electric energy. The thus provided electric energy is processed by the electronic units 14a, 14b which are electrically connected, by electric lines 19a, 19b, to the power sink 20 for further use. In embodiments where the power sink 20 belongs to a detachable load, the electric lines preferably comprise disconnectable connectors (such as plugs).

Further to driving the electric generator, the gas flow is utilised for operating the flight control system of the flight vehicle (1):
Indeed, in the example shown, the gas generator 11 is configured to generate hot gas. A portion of the thus generated hot gas flow is used to heat, by means of a heat exchanger 16, a liquid L included in the tank 15, thus causing that a portion of the liquid vaporises. Thereby, the pressure within the tank increases, which may be used for feeding the (not shown) engine.

In the embodiment depicted, the portion of the gas flow passes the heat exchanger 16 after having passed the electric generator 13a. In alternative embodiments, additionally or alternatively, a heat exchanger may be arranged so as to be passed, by at least a portion of the gas flow, before the gas flow drives a respective electric generator.

As is to be understood, alternatively to the embodiment shown, various or all branches of the gas line system 12 might run through a common or through respective heat exchanger(s) which may then be used to heat a liquid in a common tank or various volumes of liquid in various tanks of a same or different propulsion system(s) of the flight vehicle.

In the embodiment shown in Figure 1, the flight control system further comprises a nozzle system 17 with nozzles 18a, 18b through which gas of the gas flow is discharged.

By means of the propulsion system (including the tank 15) and the nozzle system 17, the power supply system is configured or operable to operate a flight control system. This may comprise controlling at least one parameter of the flight vehicle (such as a current position relative to another object (e.g., to a point on the earth surface), a linear velocity and/or an orientation). In particular, the operating of the flight control system may be such that the flight vehicle 1 maintains its current relative position, its current linear velocity and/or its current orientation. Alternatively or additionally (possibly at another time) said operating may be such that a current relative position, a current linear velocity and/or a current orientation of the flight vehicle is modified.

The nozzles 18a, 18b may be adjustable, e.g. with respect to their respective orientation and/or the size of their respective opening(s), such that they may be alternatively used (at different times) both for maintaining and for modifying one or more of said parameters.

Alternatively or additionally, the nozzles 18a, 18b may be selectable to be discarded in another situation than that shown in Figure 1. In such other situation further nozzles (not depicted) of the nozzle system 17 may be used for discharging gas of the gas flow, which may have another effect with regard to the flight of the vehicle than the discharge through nozzles 18a, 18b.

In particular, by means of an appropriate utilisation of the nozzle system 17 (e.g., via an advantageous selection and/or adjustment of the nozzles 18a, 18b), negative impacts of the gas discharge may be systematically prevented, or even advantageous effects may be caused by the discharge.

By providing electric energy by means of generating a linear gas flow in the gas generator 11, utilising the gas flow for generating a rotation and converting the rotational energy into electric power, the power supply system 10 provides for a high flexibility and simplification with regard to the construction of the flight vehicle 1 and the application of the power supply system. Moreover, the power supply system 10 requires a minimum of mass and service, and it is capable of providing high electric power such as for enabling an electric launching operation.

Furthermore, as the gas flow is further used to operate a flight control system (in the case shown, by using heat of the generated gas flow to pressurise the tank 15 of a propulsion system and by discharging gas of the gas flow by means of the nozzle system 17), extensive advantage can be taken of the generated gas flow.

The method serves for providing electric energy in a flight vehicle. The method comprises generating a gas flow by means of a gas generator 11, and utilising the gas flow both for driving at least one electric generator 13a, 13b and for operating a flight control system of the flight vehicle.

The power supply system 10 comprises a gas generator 11 for generating a gas flow, a gas line system 12 for conveying the gas flow, at least one electric generator 13a, 13b and a flight control system of the flight vehicle. The flight control system is configured or operable to utilise the generated gas flow for driving the at least one electric generator (13a, 13b) and for operating the flight control system .

### Reference signs

- 1: flight vehicle

- 10: power supply system
- 11: gas generator
- 12: gas line system
- 13a, 13b: electric generator
- 14a, 14b: electronic unit
- 15: tank
- 16: heat exchanger
- 17: nozzle system
- 18a, 18b: nozzle
- 19a, 19b: electric line

- 20: power sink

- L: liquid

## Claims

1. Method for providing electric energy in a flight vehicle (1) carrying a detachable load to be transported into space, the flight vehicle being an aircraft or a spacecraft,
the method comprising generating a gas flow by means of a gas generator (11), and utilising the gas flow both for driving at least one electric generator (13a, 13b) and for operating a flight control system of the flight vehicle,
further comprising conducting the electric energy to at least one power sink (20) of the flight vehicle (1),
wherein the at least one power sink (20) belongs to the detachable load or the at least one power sink (20) comprises at least one unit belonging to the aircraft or spacecraft and at least one unit belonging to the detachable load.

2. Method according to claim 1, wherein the gas flow is a flow of hot gas, wherein the flight control system comprises a propulsion system with a tank, and wherein operating the flight control system comprises pressurising the tank by vaporising a liquid within the tank using heat of the hot gas flow.

3. Method according to one of claims 1 or 2, wherein the flight control system comprises a nozzle system, and operating the flight control system comprises discharging gas of the gas flow through one or more nozzles of the nozzle system.

4. Method according to claim 3, further comprising
- selecting one or more nozzles (18a, 18b) of the nozzle system (17) for discharging the gas through the selected nozzles so as to control the vehicle's flight and/or
- adjusting one or more adjustable nozzles (18a, 18b) of the nozzle system so as to control the vehicle's flight.

5. Method according to one of the preceding claims, wherein operating the flight control system comprises
- modifying a current relative position, a current velocity and/or a current orientation of the flight vehicle (1); and/or
- maintaining a current relative position, a current linear velocity and/or a current orientation of the flight vehicle (1) .

6. Method according to one of the preceding claims, wherein the gas flow is generated in an intermittent or a continuous operation of the gas generator (11).

7. Flight vehicle (1) carrying a detachable load to be transported into space, the flight vehicle being an aircraft or a spacecraft, comprising
- a power supply system (10) and
- one or more power sink/s (20),
the power supply system comprising
- a gas generator (11) for generating a gas flow;
- a gas line system (12) for conveying the gas flow;
- at least one electric generator (13a, 13b); and
- a flight control system of the flight vehicle,
wherein the power supply system is configured or operable to utilise the generated gas flow both for driving the at least one electric generator (13a, 13b) and for operating the flight control system,
and wherein at least one of the one or more power sink/s (20) is electrically connected to the electric generator (13a, 13b),
wherein
the at least one power sink (20) belongs to the detachable load or the at least one power sink comprises at least one unit belonging to the aircraft or spacecraft and at least one unit belonging to the detachable load.

8. Flight vehicle according to claim 7, wherein the gas generator (11) of the power supply system is configured to generate a hot gas flow, wherein the flight control system comprises a propulsion system with a tank, and wherein operating the flight control system comprises pressurising the tank (15) by vaporising a liquid within the tank using heat of the hot gas flow.

9. Flight vehicle according to one of claims 7 or 8, wherein the flight control system comprises a nozzle system (17), and wherein operating the flight control system comprises discharging gas of the gas flow through one or more nozzles (18a, 18b) of the nozzle system.

10. Flight vehicle according to claim 9, wherein the nozzle system (17)
- is adjustable by selection of at least one nozzle (18a, 18b) respectively to be employed or to be discarded for discharging the gas flow and/or
- comprises at least one nozzle which is adjustable so as to control the vehicle's flight.

11. Flight vehicle according to one of claims 7 to 10, wherein operating the flight control system comprises
- modifying a current relative position, a current velocity and/or a current orientation of the flight vehicle (1); and/or
- maintaining a current relative position, a current linear velocity and/or a current orientation of the flight vehicle (1) .

12. Flight vehicle according to one of claims 7 to 11, wherein the gas generator (11) is further configured to drive a turbopump for feeding a combustion chamber of the flight vehicle (1) with propellant.

13. Flight vehicle according to one of claims 7 to 12, the flight vehicle is a spacecraft, said spacecraft being a stage of a multistage rocket.

## Patentansprüche

1. Verfahren zum Bereitstellen elektrischer Energie in einem Luftfahrzeug (1), das eine absetzbare Last trägt, die in den Weltraum transportiert werden soll, wobei das Luftfahrzeug ein Flugzeug oder ein Raumfahrzeug ist,
wobei das Verfahren das Erzeugen eines Gasstroms mittels eines Gasgenerators (11) und das Verwenden des Gasstroms sowohl zum Antreiben mindestens eines Stromgenerators (13a, 13b) als auch zum Betreiben eines Flugsteuersystems des Luftfahrzeugs umfasst,
das ferner das Leiten der elektrischen Energie zu mindestens einer Stromsenke (20) des Luftfahrzeugs (1) umfasst, wobei
die mindestens eine Stromsenke (20) zu der absetzbaren Last gehört oder die mindestens eine Stromsenke (20) mindestens eine Einheit umfasst, die zu dem Flugzeug oder Raumfahrzeug gehört, und mindestens eine Einheit, die zu der absetzbaren Last gehört.

2. Verfahren nach Anspruch 1, wobei der Gasstrom ein Strom heißen Gases ist, wobei das Flugsteuersystem ein Antriebssystem mit einem Tank umfasst, und wobei das Betreiben des Flugsteuersystems das Druckbeaufschlagen des Tanks durch Verdampfen einer Flüssigkeit in dem Tank unter Verwendung von Wärme des heißen Gasstroms umfasst.

3. Verfahren nach einem der Ansprüche 1 oder 2, wobei das Flugsteuersystem ein Düsensystem umfasst, und das Betreiben des Flugsteuersystems das Entladen von Gas des Gasstroms durch eine oder mehrere Düsen des Düsensystems umfasst.

4. Verfahren nach Anspruch 3, das ferner Folgendes umfasst
- Auswählen einer oder mehrerer Düsen (18a, 18b) des Düsensystems (17) zum Entladen des Gases durch die ausgewählten Düsen, um den Flug des Fahrzeugs zu steuern und/oder
- Einstellen einer oder mehrerer einstellbarer Düsen (18a, 18b) des Düsensystems, um den Flug des Fahrzeugs zu steuern.

5. Verfahren nach einem der vorstehenden Ansprüche, wobei das Betreiben des Flugsteuersystems Folgendes umfasst
- Modifizieren einer aktuellen relativen Position, einer aktuellen Geschwindigkeit und/oder einer aktuellen Ausrichtung des Luftfahrzeugs (1); und/oder
- Beibehalten einer aktuellen relativen Position, einer aktuellen linearen Geschwindigkeit und/oder einer aktuellen Ausrichtung des Luftfahrzeugs (1).

6. Verfahren nach einem der vorstehenden Ansprüche, wobei der Gasstrom bei einem intermittierenden oder einem kontinuierlichen Betrieb des Gasgenerators (11) erzeugt wird.

7. Luftfahrzeug (1), das eine absetzbare Last trägt, die in den Weltraum transportiert werden soll, wobei das Luftfahrzeug ein Flugzeug oder ein Raumfahrzeug ist, das umfasst
- ein Leistungsversorgungssystem (10) und
- eine oder mehrere Stromsenken (20), wobei das Leistungsversorgungssystem Folgendes umfasst
- einen Gasgenerator (11) zum Erzeugen eines Gasstroms;
- ein Gasleitungssystem (12) zum Befördern des Gasstroms;
- mindestens einen Stromgenerator (13a, 13b); und
- ein Flugsteuersystem des Luftfahrzeugs, wobei das Leistungsversorgungssystem konfiguriert oder betreibbar ist, um den erzeugten Gasstrom sowohl zum Antreiben des mindestens einen Stromgenerators (13a, 13b) als auch zum Betreiben des Flugsteuersystems zu verwenden,
und wobei mindestens eine der einen oder mehreren Stromsenken (20) elektrisch mit dem Stromgenerator (13a, 13b) verbunden ist, wobei
die mindestens eine Stromsenke (20) zu der absetzbaren Last gehört oder die mindestens eine Stromsenke mindestens eine Einheit umfasst, die zu dem Flugzeug oder Raumfahrzeug gehört, und mindestens eine Einheit, die zu der lösbaren Last gehört.

8. Luftfahrzeug nach Anspruch 7, wobei der Gasgenerator (11) des Leistungsversorgungsystems konfiguriert ist, um einen heißen Gasstrom zu erzeugen, wobei das Flugsteuersystem ein Antriebssystem mit einem Tank umfasst, und wobei das Betreiben des Flugsteuersystems das Druckbeaufschlagen des Tanks (15) durch Verdampfen einer Flüssigkeit in dem Tank unter Verwendung von Wärme des heißen Gasstroms umfasst.

9. Luftfahrzeug nach einem der Ansprüche 7 oder 8, wobei das Flugsteuersystem ein Düsensystem (17) umfasst, und wobei das Betreiben des Flugsteuersystems das Entladen von Gas des Gasstroms durch eine oder mehrere Düsen (18a, 18b) des Düsensystems umfasst.

10. Luftfahrzeug nach Anspruch 9, wobei das Düsensystem (17)
- durch Auswahl mindestens einer Düse (18a, 18b) einstellbar ist, die jeweils zum Entladen des Gasstroms eingesetzt oder verworfen werden soll, und/oder
- mindestens eine Düse umfasst, die derart einstellbar ist, dass der Flug des Fahrzeugs gesteuert wird.

11. Luftfahrzeug nach einem Ansprüche 7 bis 10, wobei das Betreiben des Flugsteuersystems Folgendes umfasst
- Modifizieren einer aktuellen relativen Position, einer aktuellen Geschwindigkeit und/oder einer aktuellen Ausrichtung des Luftfahrzeugs (1); und/oder
- Beibehalten einer aktuellen relativen Position, einer aktuellen linearen Geschwindigkeit und/oder einer aktuellen Ausrichtung des Luftfahrzeugs (1).

12. Luftfahrzeug nach einem der Ansprüche 7 bis 11, wobei der Gasgenerator (11) ferner konfiguriert ist, um eine Turbopumpe zum Speisen einer Brennkammer des Luftfahrzeugs (1) mit Treibstoff anzutreiben.

13. Luftfahrzeug nach einem der Ansprüche 7 bis 12, wobei das Luftfahrzeug ein Raumfahrzeug ist, wobei das Raumfahrzeug eine Stufe einer mehrstufigen Rakete ist.

## Revendications

1. Procédé de fourniture d'énergie électrique dans un véhicule aérien (1) portant une charge amovible à transporter dans l'espace, le véhicule aérien étant un aéronef ou un engin spatial, le procédé comprenant la génération d'un flux gazeux au moyen d'un générateur de gaz (11), et l'utilisation du flux gazeux à la fois pour entraîner au moins un générateur électrique (13a, 13b) et pour faire fonctionner un système de commande de vol du véhicule aérien, comprenant en outre la conduite de l'énergie électrique vers au moins un puits de puissance (20) du véhicule aérien (1), dans lequel le au moins un puits de puissance (20) appartient à la charge amovible ou le au moins un puits de puissance (20) comprend au moins une unité appartenant à l'aéronef ou à l'engin spatial et au moins une unité appartenant à la charge amovible.

2. Procédé selon la revendication 1, dans lequel le flux gazeux est un flux gazeux chaud, dans lequel le système de commande de vol comprend un système de propulsion avec un réservoir, et dans lequel le fonctionnement du système de commande de vol comprend la mise sous pression du réservoir en vaporisant un liquide dans le réservoir en utilisant la chaleur du flux gazeux chaud.

3. Procédé selon une des revendications 1 ou 2, dans lequel le système de commande de vol comprend un système de tuyère, et le fonctionnement du système de commande de vol comprend la décharge de gaz du flux gazeux à travers une ou plusieurs tuyères du système de tuyère.

4. Procédé selon la revendication 3, comprenant en outre
- la sélection d'une ou plusieurs tuyères (18a, 18b) du système de tuyères (17) pour décharger le gaz à travers les tuyères sélectionnées de manière à commander le vol du véhicule et/ou
- régler une ou plusieurs tuyères réglables (18a, 18b) du système de tuyères afin de commander le vol du véhicule.

5. Procédé selon une des revendications précédentes, dans lequel le fonctionnement du système de commande de vol comprend de
- modifier une position relative actuelle, une vitesse actuelle et/ou une orientation actuelle du véhicule aérien (1) ; et/ou
- maintenir une position relative actuelle, une vitesse linéaire actuelle et/ou une orientation actuelle du véhicule aérien (1).

6. Procédé selon une des revendications précédentes, dans lequel le flux gazeux est généré lors d'un fonctionnement intermittent ou continu du générateur de gaz (11).

7. Véhicule aérien (1) transportant une charge amovible à transporter dans l'espace, le véhicule aérien étant un aéronef ou un engin spatial, comprenant
- un système d'alimentation électrique (10) et
- un ou plusieurs puits de puissance (20),
le système d'alimentation électrique comprenant
- un générateur de gaz (11) pour générer un flux gazeux ;
- un système de conduite de gaz (12) pour transporter le flux gazeux ;
- au moins un générateur électrique (13a, 13b) ; et
- un système de commande de vol du véhicule aérien,
dans lequel le système d'alimentation électrique est configuré ou utilisable pour utiliser le flux gazeux généré à la fois pour entraîner le au moins un générateur électrique (13a, 13b) et pour faire fonctionner le système de commande de vol, et dans lequel au moins un du ou des puits de puissance (20) est électriquement connecté au générateur électrique (13a, 13b)
dans lequel le au moins un puits de puissance (20) appartient à la charge amovible ou le au moins un puits de puissance comprend au moins une unité appartenant à l'aéronef ou à l'engin spatial et au moins une unité appartenant à la charge amovible.

8. Véhicule aérien selon la revendication 7, dans lequel le générateur de gaz (11) du système d'alimentation est configuré pour générer un flux gazeux chaud, dans lequel le système de commande de vol comprend un système de propulsion avec un réservoir, et dans lequel le fonctionnement du système de commande de vol comprend la pressurisation du réservoir (15) en vaporisant un liquide à l'intérieur du réservoir en utilisant la chaleur du flux gazeux chaud.

9. Véhicule aérien selon une des revendications 7 ou 8, dans lequel le système de commande de vol comprend un système de tuyère (17), et dans lequel le fonctionnement du système de commande de vol comprend la décharge de gaz du flux gazeux à travers une ou plusieurs tuyères (18a, 18b) du système de tuyère.

10. Véhicule aérien selon la revendication 9, dans lequel le système de tuyère (17)
- est réglable par sélection d'au moins une tuyère (18a, 18b) respectivement à utiliser ou à supprimer pour évacuer le flux gazeux et/ou
- comprend au moins une tuyère réglable pour commander le vol du véhicule.

11. Véhicule aérien selon une des revendications 7 à 10, dans lequel le fonctionnement du système de commande de vol comprend de
- modifier une position relative actuelle, une vitesse actuelle et/ou une orientation actuelle du véhicule aérien (1) ; et/ou
- maintenir une position relative actuelle, une vitesse linéaire actuelle et/ou une orientation actuelle du véhicule aérien (1).

12. Véhicule aérien selon une des revendications 7 à 11, dans lequel le générateur de gaz (11) est en outre configuré pour entraîner une turbopompe destinée à alimenter une chambre de combustion du véhicule aérien (1) en propergol.

13. Véhicule aérien selon une des revendications 7 à 12, le véhicule aérien est un engin spatial, ledit engin spatial étant un étage d'une fusée à plusieurs étages.
